# EUROPEAN PATENT APPLICATION

(11) **EP 4 582 292 A1**
(43) Date of publication of application: **09.07.2025**
(21) Application number: 24217083.5
(22) Date of filing: 03.12.2024
(51) Int. Cl.: B60L 15/20, F16H 61/08, B60W 30/19

(54) **BATTERY ELECTRIC VEHICLE**

(30) Priority: 27.12.2023 JP 2023221162
(71) Applicant: TOYOTA JIDOSHA KABUSHIKI KAISHA, Aichi-ken, 471-8571 (JP)
(72) Inventor: KANZAKI, Kentaroh, TOYOTA-SHI, AICHI-KEN, 471-8571 (JP); ISAMI, Yoichiro, TOYOTA-SHI, AICHI-KEN, 471-8571 (JP); FURUHASHI, Yusuke, TOYOTA-SHI, AICHI-KEN, 471-8571 (JP); YAMANE, Naruto, TOYOTA-SHI, AICHI-KEN, 471-8571 (JP)
(74) Representative: Cabinet Beau de Loménie

(57) **Abstract**

A battery electric vehicle (100) includes an electric motor (4F, 4R) as a driving source. The battery electric vehicle (100) includes an accelerator pedal (22), a pseudo shifter (24), and a controller (101). The pseudo shifter (24) imitates a shifter that is used to perform a shifting operation of a manual transmission internal combustion engine vehicle. The controller (101) is configured to change a relationship among a vehicle speed of the battery electric vehicle (100), an accelerator operation amount of the accelerator pedal (22), and torque of the electric motor (4F, 4R) in response to an operation of the pseudo shifter (24). The controller (101) is configured to change the relationship within a predetermined time after the pseudo shifter (24) is operated.

## Description

### BACKGROUND OF THE INVENTION

### 1. Field of the Invention

The present disclosure relates to battery electric vehicles including an electric motor as a driving source.

### 2. Description of Related Art

Japanese Unexamined Patent Application Publication No. 2022-030838 (JP 2022-030838 A) discloses a battery electric vehicle that can simulate manual shifting operations of a vehicle equipped with a manual transmission and powered by an internal combustion engine (hereinafter referred to as "manual transmission internal combustion engine vehicle") by controlling an electric motor. The battery electric vehicle disclosed in this publication includes a vehicle model that simulates a manual transmission internal combustion engine vehicle, and a driver model that simulates an exemplary driver. The vehicle model includes an engine model, a clutch model, and a manual transmission model. The driver model calculates the amount of depression of a clutch pedal of a virtual clutch simulated by the clutch model, based on the rotational speed difference between the rotational speed of an input shaft of a virtual manual transmission simulated by the manual transmission model and the virtual engine rotational speed simulated by the engine model.

In the battery electric vehicle disclosed in the above publication, unless the rotational speed difference calculated by the driver model decreases, the virtual clutch cannot be engaged, and the shifting operation will not be completed according to calculation by the vehicle model. During this time, the battery electric vehicle simulates the behavior of the manual transmission internal combustion engine vehicle with the clutch disengaged. Therefore, the longer it takes to complete the shifting operation, the more uncomfortable the driver feels.

### SUMMARY OF THE INVENTION

The present disclosure provides a battery electric vehicle that can simulate shifting operations of a manual transmission internal combustion engine vehicle. The battery electric vehicle reduces the possibility that a driver may feel uncomfortable due to a long shift time.

A battery electric vehicle according to one embodiment of the present disclosure includes an electric motor as a driving source. The battery electric vehicle includes an accelerator pedal, a pseudo shifter, and a controller. The pseudo shifter imitates a shifter that is used to perform a shifting operation of a manual transmission internal combustion engine vehicle. The controller is configured to change a relationship among a vehicle speed of the battery electric vehicle, an accelerator operation amount of the accelerator pedal, and torque of the electric motor in response to an operation of the pseudo shifter. The controller is configured to change the relationship within a predetermined time after the pseudo shifter is operated.

In the embodiment of the present disclosure, the controller may be configured as follows.

The controller may include a memory storing a vehicle model that models a virtual vehicle, and a processing circuit coupled to the memory and configured to execute the vehicle model. The vehicle model may include: a driver model that models an exemplary driver; an engine model that models a virtual internal combustion engine; a clutch model that models a virtual clutch; and a transmission model that models a virtual manual transmission.

The driver model may be configured to calculate a virtual accelerator operation amount of the virtual internal combustion engine, a virtual clutch operation amount of the virtual clutch, and a virtual gear stage of the virtual manual transmission, based on the accelerator operation amount of the accelerator pedal, a shift position of the pseudo shifter, the vehicle speed of the battery electric vehicle, and a virtual engine rotational speed of the virtual internal combustion engine. The engine model may be configured to, when the virtual clutch is in an engaged state, calculate the virtual engine rotational speed based on the virtual gear stage and the vehicle speed, and may be configured to, when the virtual clutch is in a disengaged state, calculate the virtual engine rotational speed based on the virtual accelerator operation amount and a virtual moment of inertia of the virtual internal combustion engine.

The driver model may be configured to calculate the virtual clutch operation amount so as to engage the virtual clutch, when a rotational speed difference between the virtual engine rotational speed and a virtual input shaft rotational speed of the virtual manual transmission falls within a predetermined range after shifting of the virtual manual transmission is started. The driver model may be configured to, when a time elapsed from start of the shifting of the virtual manual transmission exceeds a predetermined backup time, calculate the virtual clutch operation amount so as to engage the virtual clutch regardless of the rotational speed difference between the virtual engine rotational speed and the virtual input shaft rotational speed.

In the battery electric vehicle according to the embodiment of the present disclosure, when the driver operates the pseudo shifter, the relationship among the vehicle speed of the battery electric vehicle, the accelerator operation amount of the accelerator pedal, and the torque of the electric motor is always changed within the predetermined time. As a result, when a shifting operation of a manual transmission internal combustion engine vehicle is simulated, the shifting operation will always be completed within the predetermined time from the operation of the pseudo shifter. This reduces the possibility that the driver may feel uncomfortable due to a long shift time.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows the configuration of a battery electric vehicle according to an embodiment of the present disclosure;
FIG. 2 shows the configuration of a vehicle model included in a controller;
FIG. 3 illustrates a state determination process that is performed by a driver model;
FIG. 4 illustrates details of a shift state determination process that is performed by the driver model;
FIG. 5 is a flowchart showing the flow of a backup shift process; and
FIG. 6 shows a specific example of shift control that is performed by the controller.

### DETAILED DESCRIPTION OF EMBODIMENTS

### 1. Configuration of Power System of Battery Electric Vehicle

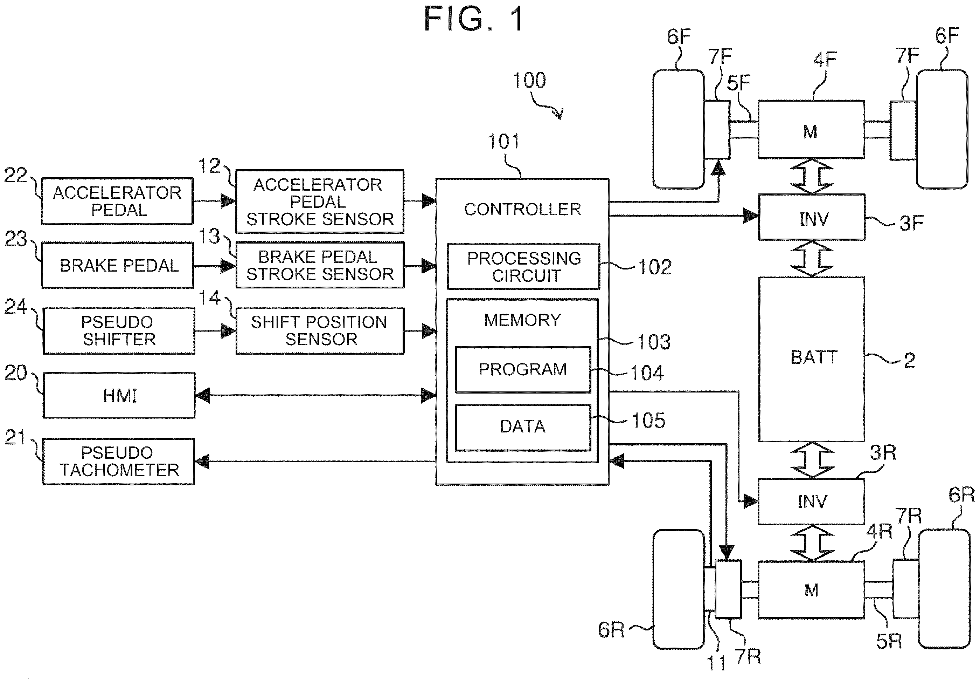

FIG. 1 schematically shows the configuration of a battery electric vehicle 100 according to an embodiment of the present disclosure. First, the configuration of a power system of the battery electric vehicle 100 will be described with reference to FIG. 1.

The battery electric vehicle 100 includes two electric motors (M) 4F, 4R at the front and rear as traction power sources. The electric motors 4F, 4R are, for example, three-phase alternating current (AC) motors. The front electric motor 4F is connected to a front drive shaft 5F that drives front wheels 6F. The rear electric motor 4R is connected to a rear drive shaft 5R that drives rear wheels 6R. The front wheels 6F are suspended on electronically controlled right and left front suspensions 7F that are independent of each other. The rear wheels 6R are suspended on electronically controlled right and left rear suspensions 7R that are independent of each other.

The front electric motor 4F and the rear electric motor 4R are equipped with inverters (INVs) 3F, 3R, respectively. The front inverter 3F and the rear inverter 3R are each connected to a battery (BATT) 2. That is, the battery electric vehicle 100 is a battery electric vehicle (BEV) that runs on the electrical energy stored in the battery 2. The inverters 3F, 3R are, for example, voltage inverters, and control the torque of the electric motors 4F, 4R, respectively, by pulse width modulation (PWM) control.

### 2. Configuration of Control System of Battery Electric Vehicle

Next, the configuration of a control system of the battery electric vehicle 100 will be described with reference to FIG. 1.

The battery electric vehicle 100 includes a vehicle speed sensor 11. At least one of wheel speed sensors, not shown, mounted on the right and left front wheels 6F and the right and left rear wheels 6R is used as the vehicle speed sensor 11. The battery electric vehicle 100 also includes an accelerator pedal stroke sensor 12. The accelerator pedal stroke sensor 12 is provided for an accelerator pedal 22, and outputs a signal indicating the amount of depression of the accelerator pedal 22, i.e., the accelerator operation amount. The battery electric vehicle 100 further includes a brake pedal stroke sensor 13. The brake pedal stroke sensor 13 is provided for a brake pedal 23, and outputs a signal indicating the amount of depression of the brake pedal 23, that is, the brake operation amount.

The accelerator pedal 22 and the brake pedal 23 are driving operation members that are used to drive the battery electric vehicle 100. In addition to these driving operation members, the battery electric vehicle 100 includes a pseudo shifter 24 imitating a shifter that is used to perform shifting operations of a manual transmission internal combustion engine vehicle. The pseudo shifter 24 may be a pseudo sequential shifter imitating a sequential shifter such as a paddle shifter, or may be a pseudo H-shifter imitating an H-shifter. It is herein assumed that the pseudo shifter 24 is a pseudo paddle shifter imitating a paddle shifter.

The pseudo shifter 24 has a structure imitating shift paddles attached to a steering wheel or a steering shaft, and allows to move right and left paddles independently of each other. The pseudo shifter 24 is provided with a shift position sensor 14. The shift position sensor 14 outputs an upshift signal when the right paddle is pulled, and outputs a downshift signal when the left paddle is pulled.

The battery electric vehicle 100 further includes a human-machine interface (HMI) 20 as an interface with a driver, and a pseudo tachometer 21. The HMI 20 includes a touch panel display. The HMI 20 displays information on the touch panel display, and receives inputs from the driver through touch operations on the touch panel display. The pseudo tachometer 21 displays a virtual engine rotational speed, which will be described later, to the driver.

The battery electric vehicle 100 includes a controller 101. Sensors and devices to be controlled that are mounted on the battery electric vehicle 100 are connected to the controller 101 via an in-vehicle network. In addition to the vehicle speed sensor 11, the accelerator pedal stroke sensor 12, the brake pedal stroke sensor 13, and the shift position sensor 14, various other sensors are mounted on the battery electric vehicle 100.

The controller 101 is typically an electronic control unit (ECU). The controller 101 may be a combination of a plurality of ECUs. The controller 101 includes at least a processing circuit 102 and a memory 103. For example, the processing circuit 102 may be a central processing unit (CPU) or a combination of a CPU and a field-programmable gate array (FPGA). The memory 103 includes a random access memory (RAM) for temporarily recording data, and a read-only memory (ROM) for storing a program 104 that is executable by the processing circuit 102 and various types of data 105 related to the program. The memory 103 may be contained in the processing circuit 102. The program 104 is composed of a plurality of instruction codes. The processing circuit 102 reads the program 104 and the data 105 from the memory 103, executes the program 104, and generates control signals based on signals acquired from the sensors. The controller 101 may include one processing circuit 102, or may include a plurality of processing circuit 102.

### 3. Functions of Controller

### 3-1. Control Modes

The controller 101 can control the battery electric vehicle 100 in various control modes. The driver can select a control mode himself/herself by performing a touch operation on the touch panel display of the HMI 20. Specifically, when a touch operation is performed on the touch panel display of the HMI 20, one or more programs 104 associated with that touch operation are read from the memory 103 and executed by the processing circuit 102.

The control modes that are selectable via the HMI 20 include an automatic mode and a manual mode. The automatic mode is a control mode in which the battery electric vehicle 100 is driven as a normal BEV. In the automatic mode, the driver can basically drive the battery electric vehicle 100 only by operating the accelerator pedal 22, the brake pedal 23, and the steering wheel, not shown. In the automatic mode, shift operations of the pseudo shifter 24 are disabled. The manual mode is a control mode in which the battery electric vehicle 100 is operated like a manual transmission internal combustion engine vehicle. In the manual mode, the operation when the gear ratio of a manual transmission is changed is replicated by a shift operation of the pseudo shifter 24.

### 3-2. Vehicle Model

The controller 101 functions as a torque controller when the processing circuit 102 executes one or more torque control programs 104 stored in the memory 103. A control mode signal is input from the HMI 20 to the controller 101 that functions as a torque controller. The control mode signal includes information on the control mode selected by the driver. When the control mode is switched to the manual mode, the controller 101 calculates drive wheel torque to be generated by drive wheels using a vehicle model, and generates a motor torque command value to be given to the inverters 3F, 3R based on the drive wheel torque.

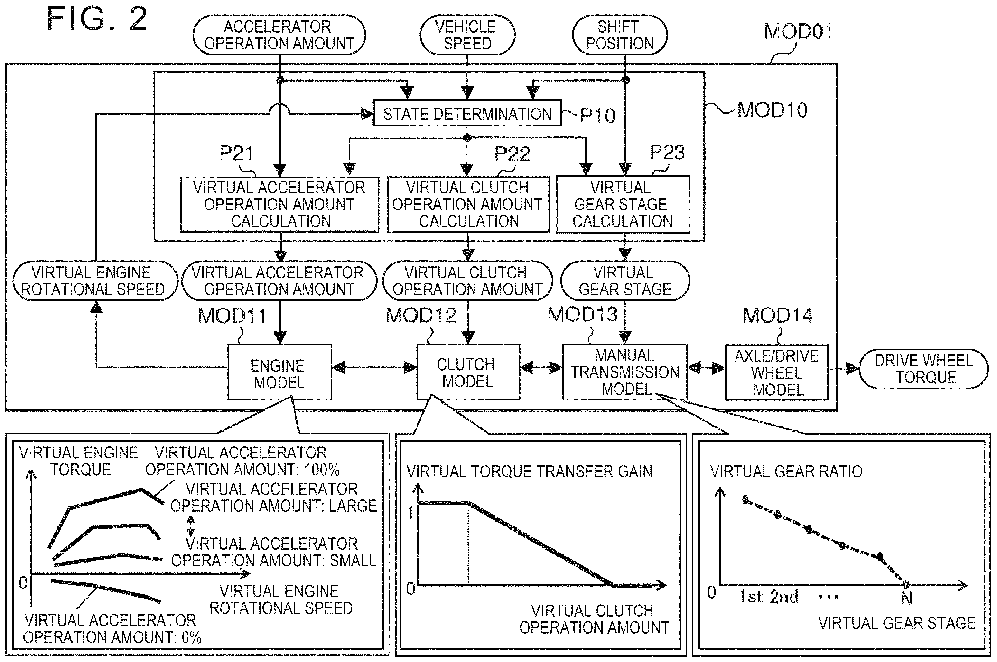

FIG. 2 shows the configuration of a vehicle model MOD01 included in the controller 101. The vehicle model MOD01 is composed of a driver model MOD10, an engine model MOD11, a clutch model MOD12, a manual transmission model MOD13, and an axle/drive wheel model MOD14. An internal combustion engine virtually implemented by the vehicle model MOD01 will be referred to as "virtual internal combustion engine," a clutch virtually implemented by the vehicle model MOD01 will be referred to as "virtual clutch," and a manual transmission virtually implemented by the vehicle model MOD01 will be referred to as "virtual manual transmission." A manual transmission internal combustion engine vehicle virtually implemented by a collection of these will be referred to as "virtual vehicle."

The engine model MOD11 models the virtual internal combustion engine. The clutch model MOD12 models the virtual clutch. The manual transmission model MOD13 models the virtual manual transmission. The axle/drive wheel model MOD14 models a virtual torque transmission system from an axle to the drive wheels. The driver model MOD10 models an exemplary driver. The exemplary driver is an experienced driver who is used to driving a manual transmission internal combustion engine vehicle. The driver model MOD10 can also be said to be a model of a virtual powertrain control unit (PCU) that integrally controls the virtual internal combustion engine, the virtual clutch, and the virtual manual transmission. The calculation results are transferred between the models.

The engine model MOD 11 calculates a virtual engine rotational speed. The virtual engine rotational speed is calculated using different calculation methods depending on whether the virtual clutch is in an engaged state or a disengaged state. When the virtual clutch is in the engaged state, the virtual engine rotational speed is calculated from the vehicle speed, the virtual overall reduction ratio, and the slip ratio of the virtual clutch. The vehicle speed is acquired from a signal from the vehicle speed sensor 11. The virtual overall reduction ratio is a numerical value obtained by multiplying the virtual gear ratio of the virtual manual transmission by a virtual reduction ratio determined by the mechanical structure from the virtual manual transmission to the drive wheels. When the virtual clutch is in the disengaged state, the virtual engine rotational speed is calculated using a virtual accelerator operation amount and a virtual moment of inertia of the virtual internal combustion engine. For example, virtual engine torque may be calculated from the current virtual engine rotational speed and the current virtual accelerator operation amount, and the amount of change in virtual engine rotational speed after a unit time may be calculated based on the virtual engine torque and the virtual moment of inertia.

The engine model MOD 11 calculates the virtual engine torque. The virtual engine torque is calculated from the virtual engine rotational speed and the virtual accelerator operation amount using a map such as that shown by the graph in FIG. 2. The virtual accelerator operation amount is calculated by the driver model MOD10. The engine model MOD11 defines the relationship between the virtual engine rotational speed and the virtual engine torque for each virtual accelerator operation amount. The virtual engine torque is input from the engine model MOD11 to the clutch model MOD12.

The clutch model MOD12 calculates a virtual torque transfer gain. The virtual torque transfer gain is a gain for calculating the degree of torque transfer of the virtual clutch. The virtual torque transfer gain is calculated from a virtual clutch operation amount using a map such as that shown by the graph in FIG. 2. The virtual clutch operation amount is calculated by the driver model MOD10. When the virtual clutch is in the engaged state, the clutch model MOD12 calculates virtual clutch torque using the virtual torque transfer gain. The virtual clutch torque is input from the clutch model MOD12 to the manual transmission model MOD13.

The manual transmission model MOD13 calculates the virtual gear ratio. The virtual gear ratio is a gear ratio determined by a virtual gear stage in the virtual manual transmission. The virtual gear ratio is calculated from the virtual gear stage using a map such as that shown by the graph in FIG. 2. The virtual gear stage is calculated by the driver model MOD10. The manual transmission model MOD13 calculates virtual transmission torque using the virtual gear ratio and the virtual clutch torque. The virtual transmission torque is input from the manual transmission model MOD13 to the axle/drive wheel model MOD14.

The axle/drive wheel model MOD14 calculates the drive wheel torque. The drive wheel torque is calculated using the virtual transmission torque and the virtual reduction ratio from the virtual manual transmission to the drive wheels. The drive wheel torque is the sum of the torques that are applied to the right and left front wheels 6F and the right and left rear wheels 6R. Torque to be generated by the front electric motor 4F is calculated by multiplying the drive wheel torque by the torque distribution ratio of the front wheels 6F and the reduction ratio from an output shaft of the front electric motor 4F to the front wheels 6F. Torque to be generated by the rear electric motor 4R is calculated by multiplying the drive wheel torque by the torque distribution ratio of the rear wheels 6R and the reduction ratio from an output shaft of the rear electric motor 4R to the rear wheels 6R.

The driver model MOD 10 calculates the virtual accelerator operation amount of the virtual internal combustion engine, the virtual clutch operation amount of the virtual clutch, and the virtual gear stage of the virtual manual transmission. In order to calculate these virtual operation amounts, the driver model MOD10 performs a state determination process P10, a virtual accelerator operation amount calculation process P21, a virtual clutch operation amount calculation process P22, and a virtual gear stage calculation process P23.

In the state determination process P10, the vehicle state and shift state of the virtual vehicle are determined. The state determination process P10 will be described in detail later. The shift state determined in the state determination process P10 is used in the virtual accelerator operation amount calculation process P21, the virtual clutch operation amount calculation process P22, and the virtual gear stage calculation process P23.

In the virtual accelerator operation amount calculation process P21, the virtual accelerator operation amount is calculated based on the accelerator operation amount obtained by the accelerator pedal stroke sensor 12 and the shift state of the virtual vehicle determined in the state determination process P10. The accelerator operation amount obtained by the accelerator pedal stroke sensor 12 represents the magnitude of a torque request to the electric motors 4F, 4R. The virtual accelerator operation amount represents the magnitude of a torque request to the virtual internal combustion engine of the virtual vehicle. The virtual accelerator operation amount calculation process P21 can be said to be a process of correcting the accelerator operation amount obtained by the accelerator pedal stroke sensor 12 to an accelerator operation amount for the virtual internal combustion engine. The virtual accelerator operation amount calculated in the virtual accelerator operation amount calculation process P21 is input to the engine model MOD11.

In the virtual clutch operation amount calculation process P22, the virtual clutch operation amount is calculated based on the shift state of the virtual vehicle determined in the state determination process P10. The virtual clutch operation amount is basically set to 0%. That is, the basic state of the virtual clutch is the engaged state. When an upshift signal or a downshift signal is input from the shift position sensor 14, the virtual clutch operation amount is temporarily set to 100%. This means that the virtual clutch is temporarily disengaged when a shift operation of the pseudo shifter 24 is performed. The virtual clutch operation amount calculated in the virtual clutch operation amount calculation process P22 is input to the clutch model MOD12.

In the virtual gear stage calculation process P23, the virtual gear stage is calculated based on the shift position obtained by the shift position sensor 14 and the shift state of the virtual vehicle determined in the state determination process P10. The number of virtual gear stages is the sum of the number of positions of the pseudo shifter 24 and neutral. The virtual gear stage calculated in the virtual gear stage calculation process P23 is input to the manual transmission model MOD13.

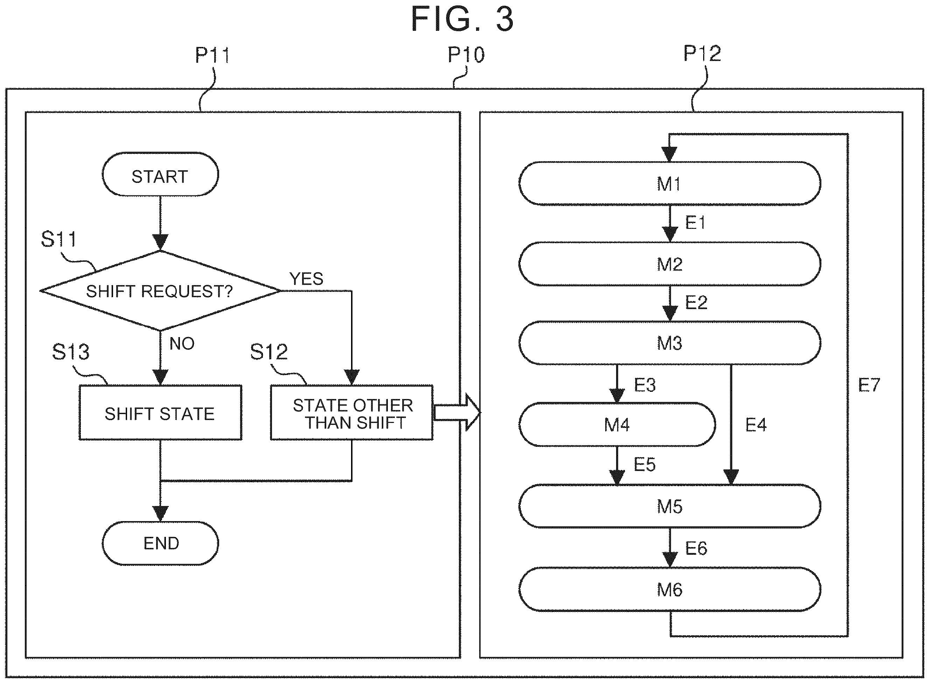

FIG. 3 illustrates the state determination process P10. The state determination process P10 includes a vehicle state determination process P11 and a shift state determination process P12. Of these two processes P11, P12, a main process is the vehicle state determination process P11. When a predetermined condition is satisfied in the vehicle state determination process P11, the shift state determination process P12 is performed.

In the vehicle state determination process P11, steps S11, S12, and S13 are performed. In step S11, it is determined whether there is a shift request from the driver. When an upshift signal or a downshift signal is input from the shift position sensor 14, it is determined that the driver is requesting shifting. In response to a shift request from the driver, shifting is started, and a shifting flag indicating that the virtual vehicle is shifting is switched from OFF to ON.

When it is determined that there is a shift request from the driver, it is determined in step S12 that the virtual vehicle is in the shift state. When it is determined that there is no shift request from the driver, it is determined in step S13 that the virtual vehicle is in a state other than the shift state. The state other than the shift state includes, for example, a state in which the pseudo shifter 24 is not being operated. When it is determined that the virtual vehicle is in the shift state, the shift state determination process P12 is performed.

In the shift state determination process P12, it is determined which of shift states M1 to M6 the virtual vehicle is in. In the shift state M1, the virtual accelerator operation amount is changed from an accelerator operation amount requested by the driver to zero. The accelerator operation amount requested by the driver is the accelerator operation amount obtained by the accelerator pedal stroke sensor 12. A transition condition E1 from the shift state M1 to the shift state M2 is that the virtual accelerator operation amount becomes zero. In the shift state M2, the virtual clutch is disengaged. That is, the virtual clutch operation amount is changed to 100%. A transition condition E2 from the shift state M2 to the shift state M3 is that the disengagement of the virtual clutch is completed. In the shift state M3, the virtual gear stage is changed to the virtual gear stage corresponding to the shift position after the shift operation. This change in virtual gear stage is made via neutral.

When the change in virtual gear stage is a downshift, the shift state M3 transitions to the shift state M5 via the shift state M4. A transition condition E3 from the shift state M3 to the shift state M4 is that a gear shift to the changed virtual gear stage is completed. In the shift state M4, the virtual engine rotational speed and the virtual input shaft rotational speed of the virtual manual transmission are synchronized. A transition condition E5 from the shift state M4 to the shift state M5 is that the rotational speed difference between the virtual engine rotational speed and the virtual input shaft rotational speed falls within a predetermined range. When the change in virtual gear stage is an upshift, the shift state M3 directly transitions to the shift state M5. A transition condition E4 from the shift state M3 to the shift state M5 is that the rotational speed difference between the virtual engine rotational speed and the virtual input shaft rotational speed falls within a predetermined range.

In the shift state M5, the virtual clutch is engaged. That is, the virtual clutch operation amount is changed to 0%. A transition condition E6 from the shift state M5 to the shift state M6 is that the engagement of the virtual clutch is completed. In the shift state M6, the virtual accelerator operation amount is returned to the accelerator operation amount requested by the driver, that is, the accelerator operation amount obtained by the accelerator pedal stroke sensor 12. A transition condition E7 from the shift state M6 to the shift state M1 is that the virtual accelerator operation amount increases to the accelerator operation amount requested by the driver.

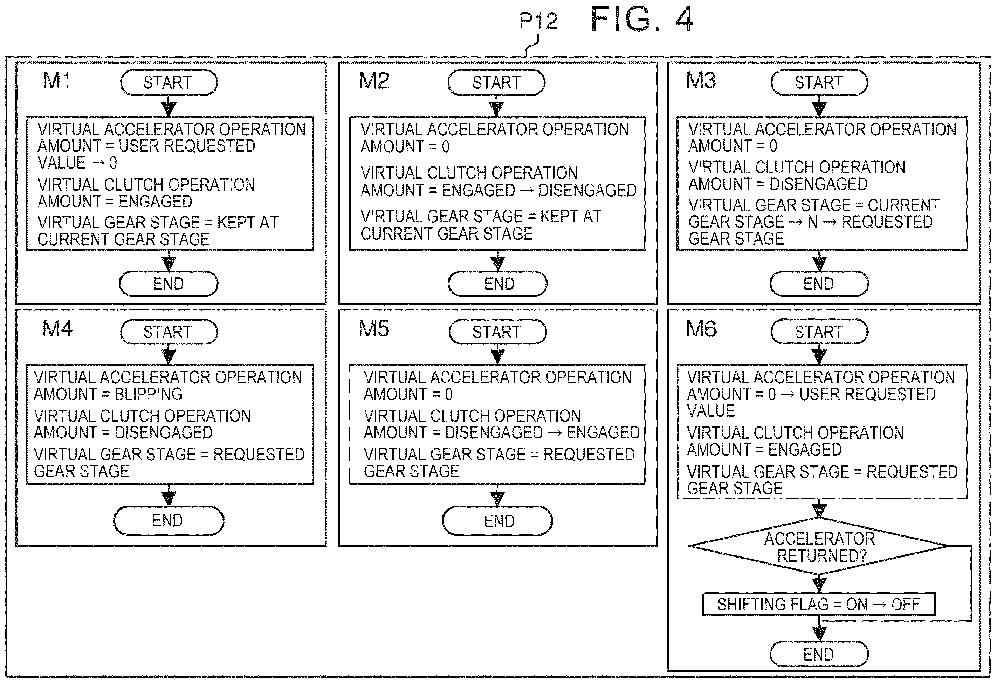

FIG. 4 illustrates details of the shift state determination process P12. Each of the shift states M1 to M6 can be represented by the virtual accelerator operation amount, the virtual clutch operation amount, and the virtual gear stage.

In the shift state M1, the virtual accelerator operation amount is gradually changed from the operation amount requested by the driver (user requested operation amount) to 0%. The virtual clutch operation amount is set to an engaged operation amount, namely an operation amount corresponding to the engaged state. The virtual gear stage is kept at the current gear stage.

In the shift state M2, the virtual accelerator operation amount is set to 0%. The virtual clutch operation amount is gradually changed from the engaged operation amount to a disengaged operation amount, namely an operation amount corresponding to the disengaged state. The virtual gear stage is kept at the current gear stage.

In the shift state M3, the virtual accelerator operation amount is set to 0%. The virtual clutch operation amount is set to the disengaged operation amount. The virtual gear stage is first changed from the current gear stage to neutral, and then changed to the gear stage requested by the driver.

In the shift state M4, blipping is performed to temporarily increase the virtual accelerator operation amount to increase the virtual engine rotational speed. The virtual clutch operation amount is set to the disengaged operation amount. The virtual gear stage is set to the requested gear stage.

In the shift state M5, the virtual accelerator operation amount is set to 0%. The virtual clutch operation amount is gradually changed from the disengaged operation amount to the engaged operation amount. The virtual gear stage is set to the requested gear stage.

In the shift state M6, the virtual accelerator operation amount is gradually changed from 0% to the user requested operation amount. The virtual clutch operation amount is set to the engaged operation amount. The virtual gear stage is set to the requested gear stage. When the virtual accelerator operation amount is returned to the accelerator operation amount requested by the driver, the flag indicating that the virtual vehicle is shifting is switched from ON to OFF.

The virtual accelerator operation amount calculation process P21 is performed according to the state of the virtual accelerator operation amount defined by each of the shift states M1 to M6 as described above. The virtual clutch operation amount calculation process P22 is performed according to the state of the virtual clutch operation amount defined by each of the shift states M1 to M6. The virtual gear stage calculation process P23 is performed according to the state of the virtual gear stage defined by each of the shift states M1 to M6.

### 4. Backup Shift Process

In the shift state determination process P12 described above, the timing to engage the virtual clutch is determined based on the rotational speed difference between the virtual engine rotational speed and the virtual input shaft rotational speed. However, during an upshift, it is expected that the rotational speed difference does not quickly decrease and it takes time for the transition condition E4 to be satisfied. During a downshift as well, it is expected that the rotational speed difference does not quickly decrease and it takes time for the transition condition E5 to be satisfied. Until the transition condition E4 or E5 is satisfied, the virtual clutch cannot be engaged and the shifting operation in the virtual vehicle will not be completed. The longer it takes to complete the shifting operation, the more uncomfortable the driver feels.

As a measure to reduce or prevent an increase in shift time, the controller 101 performs a backup shift process that will be described below. More specifically, the backup shift process is incorporated into the shift state determination process P12.

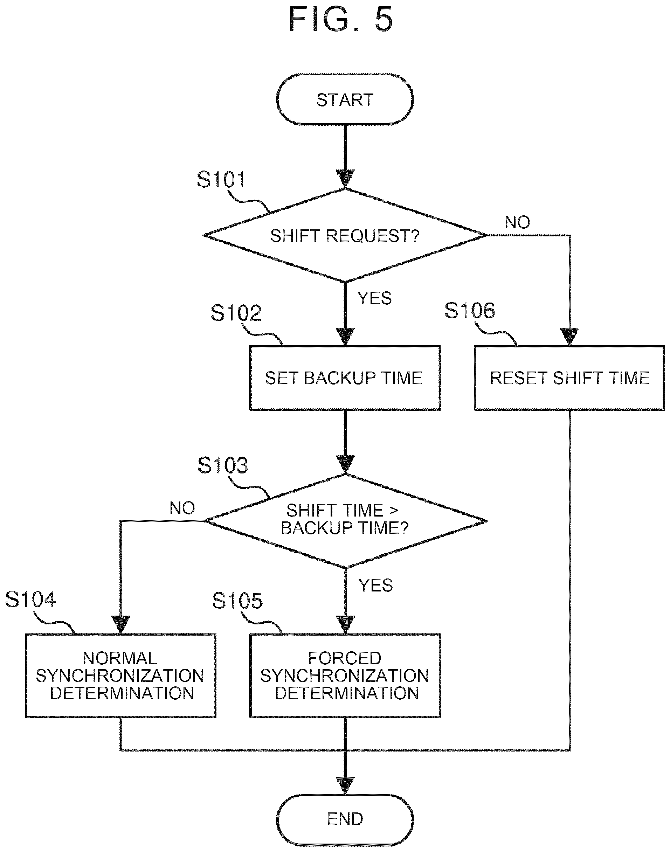

FIG. 5 is a flowchart showing the flow of the backup shift process. In step S101, it is determined whether there is a shift request from the driver. When an upshift signal or a downshift signal is input from the shift position sensor 14, it is determined that the driver is requesting shifting. In response to a shift request from the driver, shifting is started, and the shifting flag is switched from OFF to ON.

When it is determined that there is a shift request from the driver, a backup time is set in step S102. The length of the backup time is set in advance and stored as the data 105 in the memory 103. It is then determined in step S103 whether the shift time has exceeded the backup time. For example, the shift time may be defined as the time elapsed from the time when the virtual gear stage is switched from the gear stage before the start of the shifting to neutral. Alternatively, the shift time may be the time elapsed from the time when the virtual gear stage is switched from neutral to a requested gear stage.

The process proceeds to step S104 until the shift time exceeds the backup time. In step S104, a normal synchronization determination is performed. In the normal synchronization determination, the virtual engine rotational speed and the virtual input shaft rotational speed are determined to be synchronized when the transition condition E4 or E5 is satisfied. That is, when the rotational speed difference between the virtual engine rotational speed and the virtual input shaft rotational speed falls within the predetermined range, the virtual engine rotational speed and the virtual input shaft rotational speed are determined to be synchronized. When the normal synchronization determination is established, the virtual clutch operation amount calculation process P22 calculates the virtual clutch operation amount so as to engage the virtual clutch. The shifting is thus completed, and the shifting flag is switched from ON to OFF.

When the shift time exceeds the backup time, the process proceeds to step S105. In step S105, a forced synchronization determination is performed. In the forced synchronization determination, even when the rotational speed difference between the virtual engine rotational speed and the virtual input shaft rotational speed has not fallen within the predetermined range, the virtual engine rotational speed and the virtual input shaft rotation speed are forcibly determined to be synchronized. When the forced synchronization determination is established, the virtual clutch operation amount calculation process P22 calculates the virtual clutch operation amount so as to engage the virtual clutch regardless of the rotational speed difference. The shifting is thus completed, and the shifting flag is switched from ON to OFF.

When the shifting flag is switched from ON to OFF, the process proceeds from step S101 to step S106. In step S106, the shift time is reset.

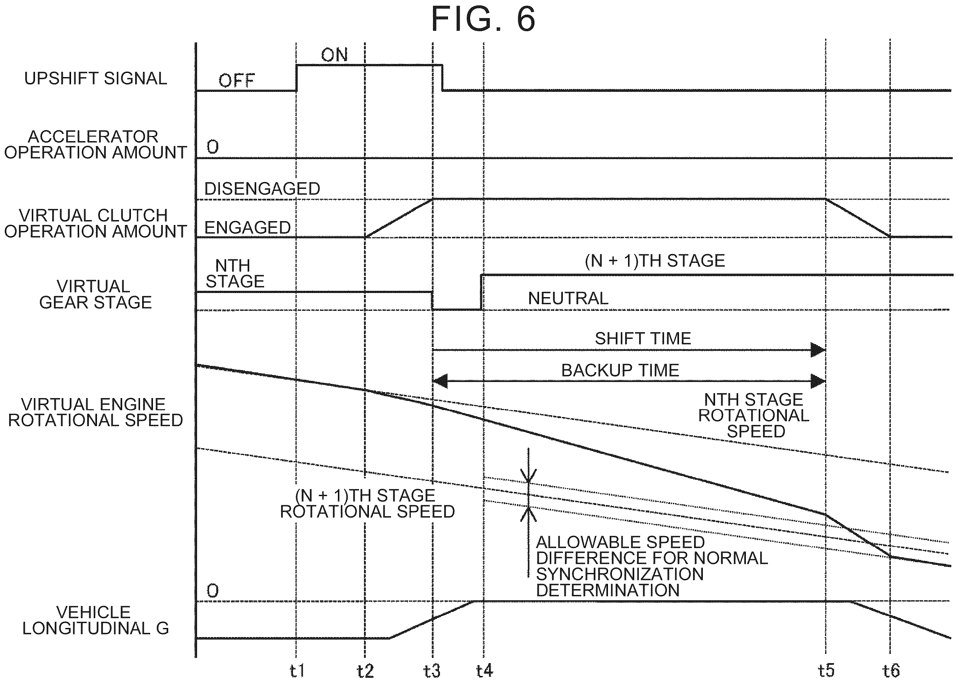

Lastly, a specific example of the shift control including the backup shift process that is performed by the controller 101 will be described with reference to FIG. 6.

According to the timing chart shown in FIG. 6, an upshift signal is input from the shift position sensor 14 to the controller 101 at time t1. In response to the input of the upshift signal, the virtual clutch operation amount starts to be changed from the engaged operation amount to the disengaged operation amount at time t2. As the virtual clutch operation amount becomes closer to the disengaged operation amount, the virtual engine rotational speed decreases, and the longitudinal acceleration acting on the battery electric vehicle 100 also decreases. At time t3, the virtual clutch operation amount becomes exactly equal to the disengaged operation amount, and in response to this, the virtual gear stage is switched from the current stage, namely an Nth stage, to neutral.

Measurement of the shift time starts at time t3 when the virtual gear stage is switched to neutral. The virtual gear stage is switched from neutral to the gear stage requested by the driver ((N + 1)th stage in the example shown in FIG. 6) at time t4 when a certain time has elapsed since the virtual gear stage was switched from the Nth stage to neutral. During this time, the normal synchronization determination continues to be performed to determine whether the rotational speed difference between the virtual engine rotational speed and the virtual input shaft rotational speed ((N + 1)th stage rotational speed in the example shown in FIG. 6) falls within an allowable speed difference.

In the example shown in FIG. 6, the shift time reaches the backup time before the rotational speed difference between the virtual engine rotational speed and the (N + 1)th stage rotational speed falls within the allowable speed difference. Therefore, the forced synchronization determination is performed at time t5 when the shift time reaches the backup time. Since the forced synchronization determination is performed, the virtual clutch operation amount starts to be changed from the disengaged operation amount to the engaged operation amount, and the virtual engine rotational speed rapidly converges to the (N + 1)th stage rotational speed. At time t6 when the change in virtual clutch operation amount from the disengaged operation amount to the engaged operation amount is completed, the virtual engine rotational speed is completely synchronized with the (N + 1)th stage rotational speed.

As described above, in the battery electric vehicle 100 according to the present embodiment, the backup shift process is performed during the shift control that is triggered by an operation of the pseudo shifter 24 by the driver. As a result, the shifting operation of the manual transmission internal combustion engine vehicle simulated by the battery electric vehicle 100 will always be completed within a predetermined time from the operation of the pseudo shifter 24. The battery electric vehicle 100 according to the present embodiment thus reduces the possibility that the driver may feel uncomfortable due to a long shift time.

## Claims

1. A battery electric vehicle (100) that includes an electric motor (4F, 4R) as a driving source, the battery electric vehicle (100) comprising:
an accelerator pedal (22);
a pseudo shifter (24) imitating a shifter that is used to perform a shifting operation of a manual transmission internal combustion engine vehicle; and
a controller (101) configured to change a relationship among a vehicle speed of the battery electric vehicle (100), an accelerator operation amount of the accelerator pedal (22), and torque of the electric motor (4F, 4R) in response to an operation of the pseudo shifter (24), wherein
the controller (101) is configured to change the relationship within a predetermined time after the pseudo shifter (24) is operated.

2. The battery electric vehicle (100) according to claim 1, wherein:
the controller (101) includes
a memory (103) storing a vehicle model that models a virtual vehicle, and
a processing circuit (102) coupled to the memory (103) and configured to execute the vehicle model;
the vehicle model includes
a driver model (MOD10) that models an exemplary driver,
an engine model (MOD11) that models a virtual internal combustion engine,
a clutch model (MOD12) that models a virtual clutch, and
a transmission model (MOD13) that models a virtual manual transmission;
the driver model (MOD10) is configured to calculate a virtual accelerator operation amount of the virtual internal combustion engine, a virtual clutch operation amount of the virtual clutch, and a virtual gear stage of the virtual manual transmission, based on the accelerator operation amount of the accelerator pedal (22), a shift position of the pseudo shifter (24), the vehicle speed of the battery electric vehicle (100), and a virtual engine rotational speed of the virtual internal combustion engine;
the engine model (MOD11) is configured to
when the virtual clutch is in an engaged state, calculate the virtual engine rotational speed based on the virtual gear stage and the vehicle speed, and
when the virtual clutch is in a disengaged state, calculate the virtual engine rotational speed based on the virtual accelerator operation amount and a virtual moment of inertia of the virtual internal combustion engine; and
the driver model (MOD10) is configured to
calculate the virtual clutch operation amount so as to engage the virtual clutch, when a rotational speed difference between the virtual engine rotational speed and a virtual input shaft rotational speed of the virtual manual transmission falls within a predetermined range after shifting of the virtual manual transmission is started, and
when a time elapsed from start of the shifting of the virtual manual transmission exceeds a predetermined backup time, calculate the virtual clutch operation amount so as to engage the virtual clutch regardless of the rotational speed difference between the virtual engine rotational speed and the virtual input shaft rotational speed.
